# EUROPEAN PATENT SPECIFICATION

(11) **EP 3 697 577 B1**
(45) Date of publication and mention of the grant of the patent: **06.05.2026**
(21) Application number: 18758535.1
(22) Date of filing: 16.07.2018
(51) Int. Cl.: B25J 9/00, B25J 9/16, B25J 15/06, B25J 5/00

(54) **A METHOD AND A DEVICE FOR HANDLING PLIABLE OBJECTS**
VERFAHREN UND VORRICHTUNG ZUR HANDHABUNG VON BIEGSAMEN GEGENSTÄNDEN
PROCÉDÉ ET DISPOSITIF DE MANIPULATION D'OBJETS PLIABLES

(30) Priority: 18.07.2017 CZ 20170413
(43) Date of publication of application: 26.08.2020
(73) Proprietor: CVUT v Praze, Fakulta Strojní, 166 07 Praha 6 (CZ)
(72) Inventor: VALÁSEK, Michael, 143 00 Praha 4 (CZ)
(74) Representative: Novotny, Karel
(86) International application number: PCT/CZ2018/000033
(87) International publication number: WO 2019/015699

(56) References cited:
- EP-A2- 2 018 940
- WO-A2-2014/199124
- DE-A1- 102012 019 958
- JP-A- 2017 100 194
- LEE ALEX X ET AL: "Learning force-based manipulation of deformable objects from multiple demonstrations", 2015 IEEE INTERNATIONAL CONFERENCE ON ROBOTICS AND AUTOMATION (ICRA), IEEE, 26 May 2015 (2015-05-26), pages 177 - 184, XP033168408, DOI: 10.1109/ICRA.2015.7138997
- HOON HUR ET AL: "Technical Feasibility of Robot-Sewn Anastomosis in Robotic Surgery for Gastric Cancer", JOURNAL OF LAPAROENDOSCOPIC & ADVANCED SURGICAL TECHNIQUES, vol. 20, no. 8, 1 October 2010 (2010-10-01), US, pages 693 - 697, XP055520212, ISSN: 1092-6429, DOI: 10.1089/lap.2010.0246

## Description

### Technical Field of the Invention

The invention concerns a method for handling a pliable object by means of a robot, where a pliable object can be gripped by robot arms and a system for handling pliable objects using robot arms.

### State-of-the-art

Nowadays industrial robots are capable to handle heavy loads. However, when failed, such a robot can be dangerous for people present within its working area. Therefore robots for collaboration with humans have been developed, the so-called HRC robots (human-robot collaboration). Humans can move within their working area without a risk of an injury. However, HRC robots have a low carrying capacity and are not capable to handle heavy loads. Therefore there is a problem when using industrial robots for handling pliable, especially flexible, objects, above all of larger dimensions. In a today's typical procedure a pliable object is first attached to a manipulation fixture carried by a gripping head of an industrial robot. A manipulation fixture is usually of a high weight due to larger dimensions of a pliable object and carrying the pliable object by a gripping head on an end of a robot arm requires the use of an industrial robot with a high carrying capacity within the working area of which people cannot be present with regard to their safety.

More complicated manipulations with flexible objects, such as cables, wires, hoses, textiles, cannot be performed using conventional industrial robots and their use, especially for assembly operations, is hardly realizable. The simple use of a two-hand industrial robot for textile folding in a free space is known but its use in the presence of people is a problem again with regard to their safety.

The documents DE 10 2012 019958 A1, WO 2014/199124 A2, EP 2 018 940 A2 and JP 2017 100194 A form part of the prior art.

The aim of this invention is a method for the use of HRC robots capable to handle pliable, especially flexible, objects, while enabling the presence of people within their working area possible without a danger. Another aim is for HRC robots to be able to carry out more complicated manipulations with flexible objects, which cannot be even performed using industrial robots.

### Subject Matter of the Invention

The invention is defined by a method for handling pliable objects by means of at least one robot according to claim 1 and a system for handling pliable objects using robot arms according to claim 7.

### Overview of Figures in Drawings

Attached figures show schematic depictions of a device for handling pliable objects, where:
Fig. 1 shows a known device with an industrial robot,
Fig. 2 to 14 show particular alternatives of the device according to the invention with HRC robots as described in examples of embodiments,
Figs. 15 and 16 show a device according to the invention with industrial robots as described in examples of embodiments,
Figs. 17 to 22 show particular alternatives of handling tools and
Figs. 23 and 24 show possible embodiments of a strengthening fixture,
Fig. 25 shows a barrier with a hole consisting of another pliable object,
Fig. 26 shows a scheme of interlacement of two pliable objects and
Fig. 27 shows a scheme of a manipulation with two pliable objects.

### Examples of the Embodiments of the Invention

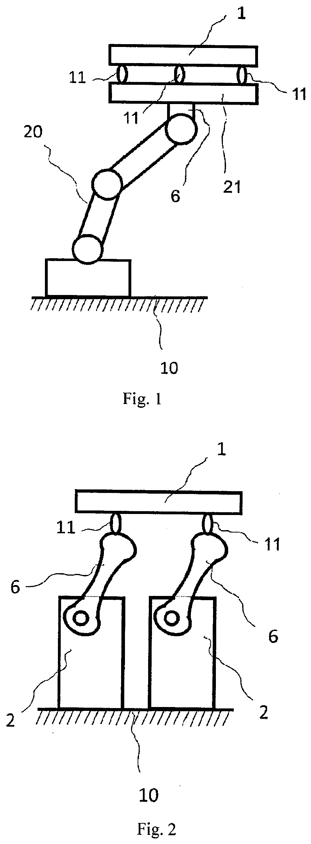

Figure 1 shows a known solution for handling pliable objects. A conventional industrial robot 20 attached to frame 10 handles pliable object 1, for example pliable object 1 is attached by handling tools 11 to manipulation fixture 21 carried by arm 6 of industrial robot 20. Owing to a higher number of handling tools 11 carried by one manipulation fixture 21, pliable object 1 can become deformed only to a limited extent allowed by the quantity of handling tools 11. Handling tools 11 can be e.g. suckers. Manipulation fixture 21 is typically of a high weight and requires the use of a conventional industrial robot with a high carrying capacity within the working area of which people cannot stay with regard to a risk of injury.

Figure 2 shows a method of handling pliable, especially flexible, objects 1 using stationary HRC robots 2 attached to frame 10. A difference in a method of handling by stationary HRC robot 2 in comparison with handling by industrial robot 20 is in a fact that a heavy manipulation fixture with more handling tools, through which a pliable object is attached to the manipulation fixture, used with industrial robots is replaced by more handling tools 11, each of which carried by a different arm 6 of one or more stationary HRC robots 2 and each of them carries pliable object 1. The handling procedure goes as follows: Manipulated pliable object 1 is placed to a defined position, often to some static fixture on a rim of a working area of stationary HRC robots 2. This can be performed by an industrial robot with a heavy manipulation fixture 21 outside a working area of HRC robots 2 or by people using other tools. Then, as depicted in Figure 2, two stationary HRC robots 2 grasp manipulated pliable object 1 by handling tools 11 attached to arms 6, which can be e.g. suckers, magnets, small gripping heads etc. Follow-up, both stationary HRC robots 2 perform a coordinated motion in order to cooperate in moving manipulated pliable object 1 over to a required position and, in case of need, finish the assembly or other manufacturing operation.

Although stationary HRC robots 2 are capable to develop only lower forces, by not using a manipulation fixture with a high weight for industrial robots and using two stationary HRC robots 2 a sufficiently high force is generated for handling pliable object 1. The use of stationary HRC robot 2 with more arms to carry handling tools 11 or more stationary HRC robots 2 to handle pliable object 1 is necessary because the simultaneous use of more handling tools 11 prevents an undesirable deformation of pliable object 1.

Considering that each individual HRC robot can only develop a low force, thus there is no risk of people injured within its working area and a failure of more HRC robots in a congruent direction at the same time is highly improbable, people can work within a working area of HRC robots without a risk of being injured by a HRC robot.

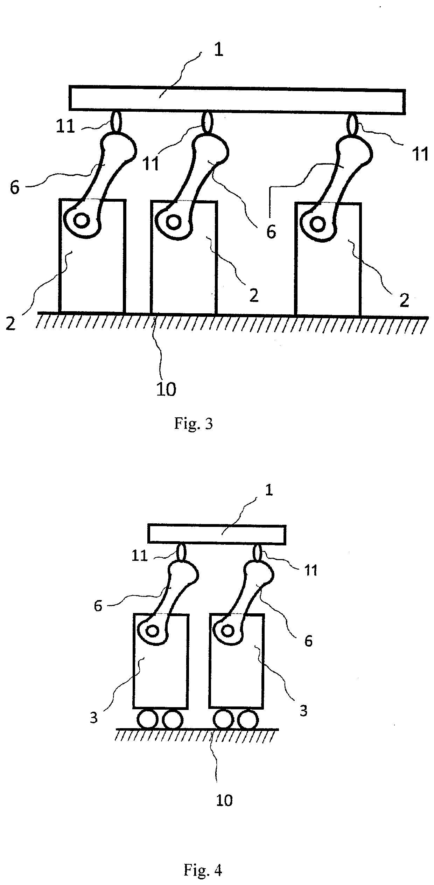

Figure 3 shows a similar arrangement as depicted in Figure 2 using a higher number of stationary HRC robots 2 for handling pliable object 1 with a larger surface area or higher weight. The Figure shows the use of three stationary HRC robots 2, which are attached to frame 10.

Figure 4 shows a similar method of handling pliable object 1 using more stationary HRC robots 2 as depicted in Figure 2. Instead of stationary HRC robots 2 attached to frame 10 two mobile HRC robots 3 moving along frame 10 are used. A method of handling is the same as depicted in Figure 2, but a working area of mobile HRC robot 3 is larger than with stationary HRC robot 2.

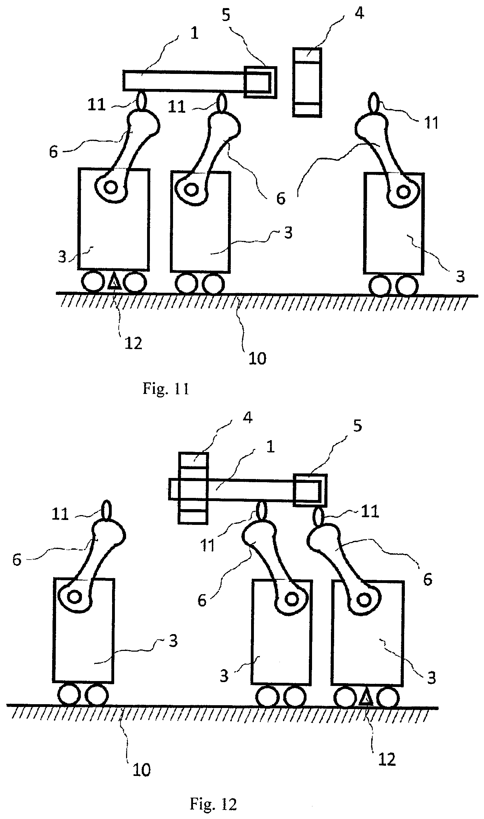

Mobile HRC robot 3 can possibly be equipped with securing element 12 for attaching to frame 10, for example a sucker (see Figs. 11 and 12). This enables attaching of mobile HRC robot 3 to frame 10 during finishing an assembling or other manufacturing operation when handling pliable object 1 and there is no danger of a decrease in its operating force in consequence of an undesirable slip of a travel.

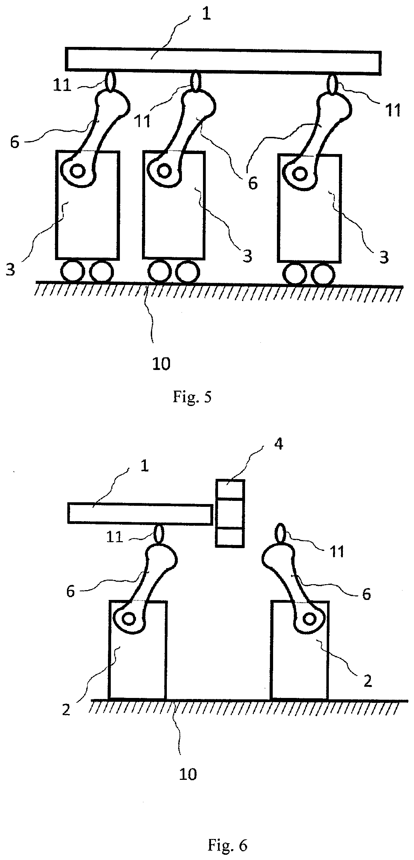

Figure 5 shows a similar arrangement as depicted in Figure 4 using a higher number of mobile HRC robots 3 for handling pliable object 1 with a larger surface area or higher weight. The Figure shows the use of three mobile HRC robots 3, which are attached to frame 10.

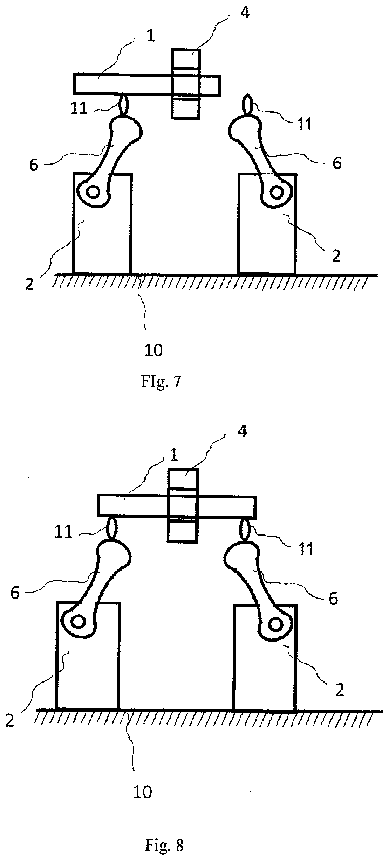

Figures 6 to 9 show a method of handling pliable, especially flexible, object 1 using two stationary HRC robots 2 attached to frame 10. Fig. 6 shows stationary HRC robot 2 on the left that carries pliable object 1 using handling tool 11 attached to arm 6 before a hole in barrier 4 through which the pliable object is to be pushed. Stationary HRC robot 2 on the left puts pliable object 1 into the hole in barrier 4 and Fig. 7 shows pushing the front part of pliable object 1 through the hole in barrier 4.

Due to a low buckling resistance of pliable object 1 a move of pliable object 1 through the hole in barrier 4 can be stopped, or a deformation of object 1 occurs as a result of friction in the hole usually exceeding the rigidity of pliable object 1 and pliable object 1 gets actually jammed.

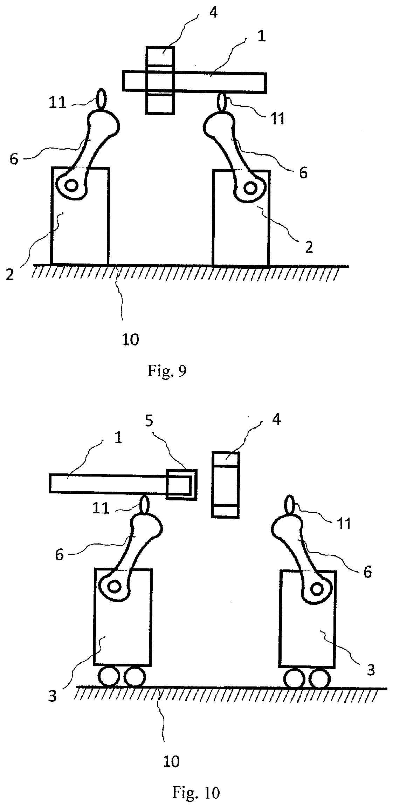

This problem can be eliminated using stationary HRC robot 2 on the right, as depicted in Fig. 8. This stationary HRC robot 2 grasps pliable object 1 and pulls it out from the hole in barrier 4. By this pulling, a force exceeding the rigidity of pliable object 1 on the left before the hole in barrier 4 can be reached, so pliable object 1 can be pulled through the hole using stationary HRC robot 2. Pulling pliable object 1 out from the hole in barrier 4 is depicted in Figure 9. The manipulation schematically depicted in Figs. 6-9 shows that the robots change the grasp (regrasp) on pliable object 1, so pliable object 1 is gradually grasped in different points by handling tools 11. This is possible especially thanks to a cooperation between at least two robots.

Figure 10 shows a similar method of handling pliable, especially flexible, objects using HRC robots by pushing (pulling) pliable object 1 through a hole in barrier 4 as depicted in Figure 6. In this case, instead of stationary HRC robots 2 attached to frame 10 two mobile HRC robots 3 moving along frame 10 are used. A method of handling is the same as depicted in Figures 6 to 9, but a working area of mobile HRC robots 3 is larger than with stationary HRC robots 2. In order to improve the handling the end of pliable object 1 is fitted with a strengthening fixture 5, for instance a thimble. By this the rigidity of the end of pliable object 1 increases, which makes pushing (pulling) pliable object 1 through the hole in barrier 4 easier.

A further improvement in the pushing (pulling) pliable, especially flexible, object 1 through the hole in barrier 4 is a procedure, in which pliable object 1, while being put into the hole in barrier 4, is rotated around its longitudinal axis or rotated alternately in one or opposite direction of the rotation, i.e. is vibrating rotationally, using HRC robot 2 or 3. By this its rigidity in a contact with the hole in barrier 4 is increased.

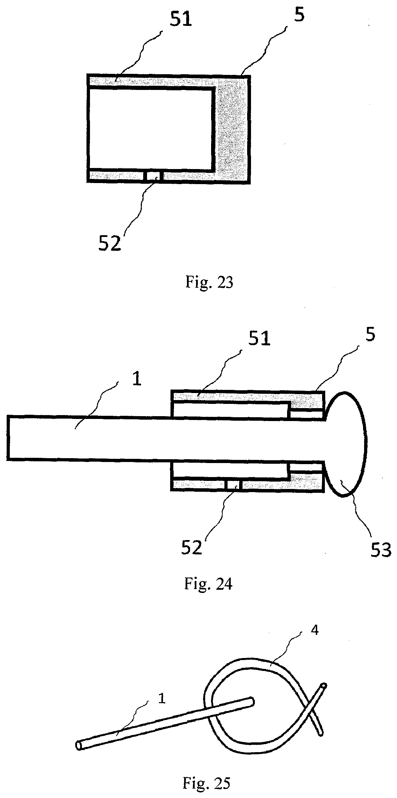

Barrier 4 with the hole can consist of pliable flexible objects themselves, for example fibers, ropes, cables, hoses. The described method of pushing flexible pliable object 1 through barrier 4 consisting of another pliable object allows automatic interlacing of these flexible pliable objects and making knots of them using robots. An example of such a barrier 4 is depicted in Fig. 25.

Figures 11 and 12 show a similar method of handling pliable, especially flexible, objects using HRC robots by pushing (pulling) a pliable object through a hole as depicted in Figure 10. Here, more mobile robots are used than necessary. There are three mobile HRC robots 3 used for pushing/pulling pliable object 1 through the hole in barrier 4. Two mobile HRC robots 3, replacing manipulation fixture 21 of industrial robot 20 depicted in Fig. 1, always handle pliable object 1 at every moment. Mobile HRC robot 3 on the left in Figure 11 is fitted with securing element 12 for attaching to frame 10, for example a sucker. Figure 12 shows pliable object 1 that is pushed (pulled) through the hole in barrier 4 and then is grasped again by two mobile HRC robots 3, whereas mobile robot 3, here fitted with securing element 12, has moved from the left side of barrier 4 to the right side in order to grasp pliable object 1 as the second mobile HRC robot 3.

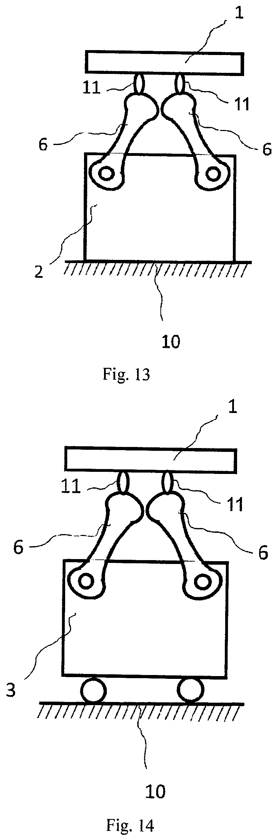

Figure 13 shows one stationary HRC robot 2 equipped with two arms 6 with handling tools 11, which can be used as a substitution for two stationary HRC robots 2 equipped with one arm 6 with handling tool 11.

Similarly, Figure 14 shows one mobile HRC robot 3 equipped with two arms 6 with handling tools 11, which can be used as a substitution for two mobile HRC robots 3 equipped with one arm 6 with handling tool 11.

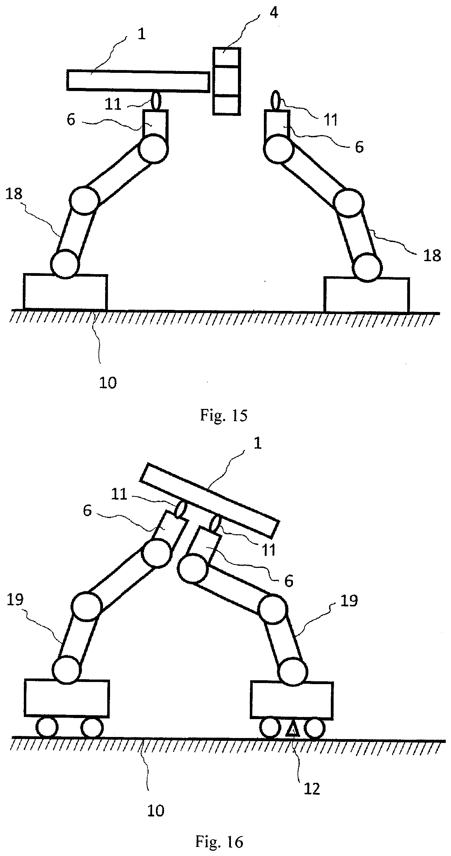

Figure 15 shows an arrangement depicted in Fig. 6 realized by using stationary industrial robots 18, in a working area of which people cannot stay, however, the robots are capable to carry out the procedure of pushing/pulling an object through that could not been performed so far. Handling tools 11 are just carried by arms 6 of stationary industrial robots 18.

Figure 16 shows an arrangement depicted in Fig. 4 realized by using mobile industrial robots 19, in a working area of which people cannot stay, however, the robots can be smaller for carrying out the manipulations with pliable object 1 because they do not carry manipulation fixture 21 depicted in Fig. 1. Handling tools 11 are just carried by arms 6 of mobile industrial robots 19. Mobile industrial robot 19 on the right side is fitted with securing element 12.

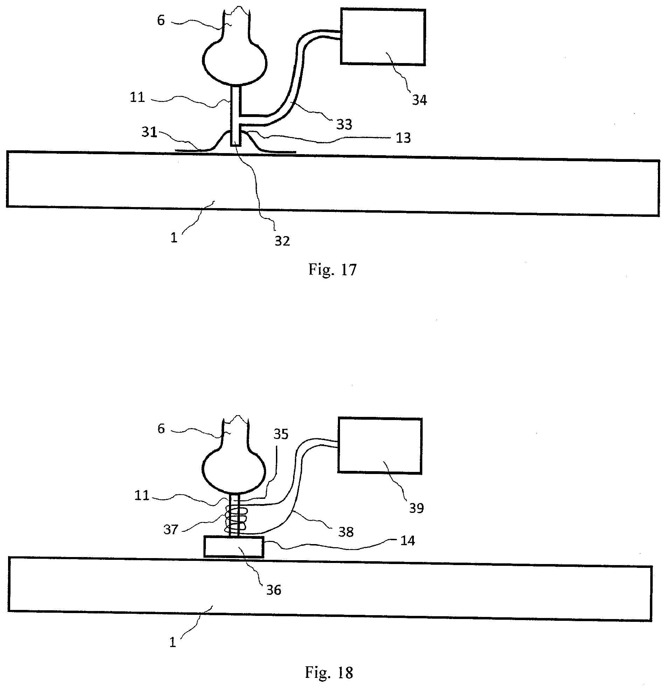

Figure 17 shows a schematic depiction of handling tool 11 consisting of sucker 13. Sucker 13 comprises pliable gasket 31 in which suction head 32 is placed, connected to vacuum source 34 through supply hose 33, typically a computer controlled vacuum pump. Sucker 13 is attached to pliable object 1 by means of pliable gasket 31, vacuum source 34 (a vacuum pump) is started by a computer and air is sucked-up from pliable gasket 31, generating an adherence pressure between pliable object 1 and sucker 13 carried by arm 6.

Figure 18 shows a schematic depiction of handling tool 11 consisting of electromagnetic hold 14. Electromagnetic hold 14 comprises a core of electromagnet 35, pole plate 36, electromagnet coil 37 connected through supply 38 to a computer controlled source of electric current 39. Pole plate 36 of electromagnetic hold 14 is placed to handled pliable object 1, a computer starts electric current running from controlled source of electric current 39, thus generating the magnetic field in electromagnet coil 37. The generated electromagnetic field draws pliable object 1 up to pole plate 36 by force. This force acts between pliable object 1 and arm 6. In this case the electromagnetic field is closed through air around electromagnet core 35.

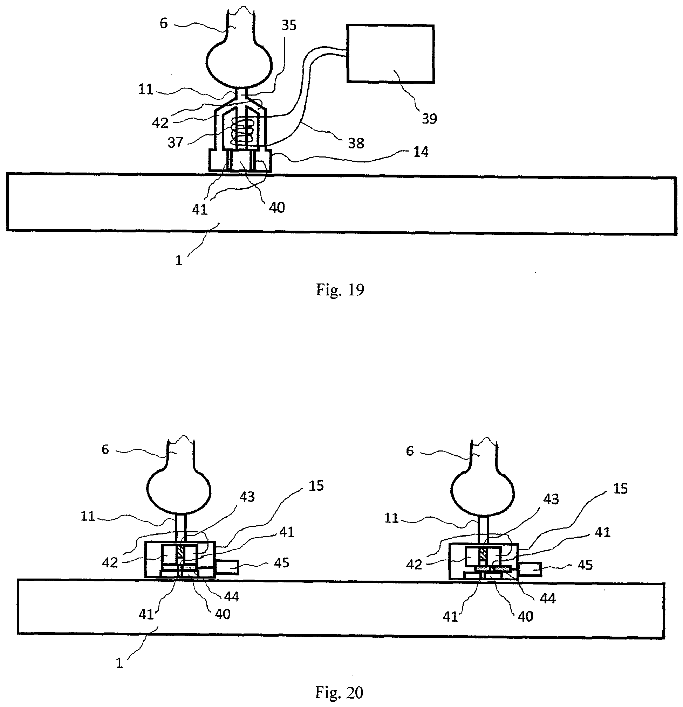

Figure 19 shows a schematic depiction of handling tool 11 consisting of a more efficient electromagnetic hold 14. Electromagnetic hold 14 comprises electromagnet core 35, split pole plate 40 divided by non-magnetic gap 41 to particular parts of pole plate 40, pole extensions 42, electromagnet coil 37 connected through supply 38 to a computer controlled source of electric current 39. Split pole plate 40 of electromagnetic hold 14 is placed to handled pliable object 1, a computer starts electric current running from controlled source of electric current 39, thus generating the magnetic field in electromagnet coil 37. The generated electromagnetic field draws pliable object 1 up to split pole plate 40 by force. This force acts between pliable object 1 and arm 6. However, in this case the electromagnetic field is closed through pole extensions 42 separated by non-magnetic gaps 41 from electromagnet core 35. Thanks to the higher magnetic conductivity of pole extensions 42 in comparison with air the larger electromagnetic field is formed and thus a higher force of attraction is generated.

Figure 20 shows a schematic depiction of handling tool 11 consisting of magnetic hold 15. Magnetic hold 15 comprises permanent magnet 43 connected to pole extensions 42 connected through shorting strip 44 to split pole plate 40 divided by non-magnetic gap 41 and then also by handled pliable object 1. A position of shorting strip 44 is regulated by actuator 45 controlled by a computer. The depiction on the right side of Figure 20 shows magnetic hold 15 placed onto handled pliable object 1 by means of split pole plate 40, with shorting strip 44 pushed-out, separating the magnetic circuit from split pole plate 40 and pliable object 1 by non-magnetic gap 41 through shorting strip 44. Then a computer starts actuator 45, which pushes shorting strip 44 into a position as depicted in Figure 20 on the left side, thus closing the magnetic circuit through split pole plate 40 and pliable object 1. By this a force of attraction is generated between split pole plate 40 and pliable object 1 acting between pliable object 1 and arm 6.

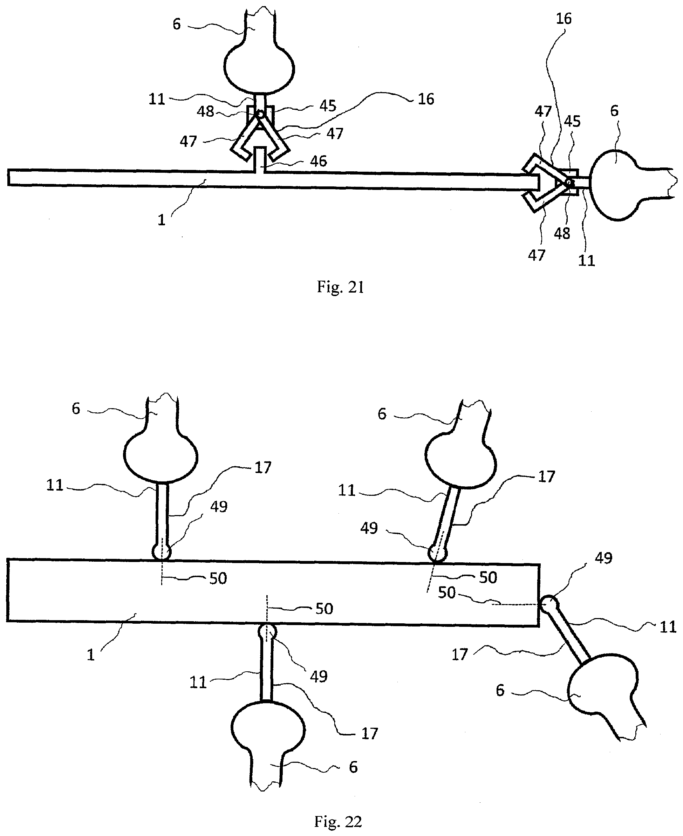

Figure 21 shows a schematic depiction of handling tool 11 consisting of mechanical gripping head 16. Mechanical gripping head 16 equipped with clamp jaws 47 attached to a common rotational joint 48 driven by computer controlled actuator 45 grips pliable object 1. Mechanical gripping head 16 can grip either a protrusion 46 of handled pliable object 1 (on the left in the Figure) or the whole pliable object 1, in a case that clamp jaws 47 are capable to encircle the object (on the right in the Figure). Computer controlled actuator 45 in rotational joint 48 draws clamp jaws 47 apart, arm 6 of a robot moves drawn-apart jaws to protrusion 46 (on the left in the Figure) or to pliable object 1 (on the right in the Figure). Computer controlled actuator 45 in rotational joint 48 draws clamp jaws 47 inward (towards a center) and clamp jaws 47 generate adherence pressure acting on protrusion 46 (on the left in the Figure) or on pliable object 1 (on the right in the Figure), resulting also in frictional force perpendicular to the adherence pressure due to Coulomb friction between the material of clamp jaws 47 and the material of pliable object 1. Thus the force between pliable object 1 and mechanical gripping head 16 carried by arm 6 is generated. Mechanical gripping head 16 can use a linear guide with an actuator or another applicable mechanism instead of rotational joint 48.

Figure 22 shows a schematic depiction of handling tool 11 consisting of press head 17. Press head 17 comprises pressing head 49 made of material that, after being pressed onto handled pliable object 1, does not deform the pliable object permanently while generating Coulomb friction between pressing head 49 and pliable object 1. At least two pressing heads 49 need to be used to grasp pliable object 1; normal lines 50 of pressing heads 49 in a direction towards the material of pliable object 1 contain an angle larger than 90 degrees. The Figure shows the use of at least one pressing head 49 acting from above and at least one acting from the bottom. The process of handling pliable object 1 is performed this way: computer controlled arms 6 with pressing heads 49 are pressed to pliable object 1 at the same time. By this adherence pressures are generated between pressing heads 49 and pliable object 1, resulting in occurrence of friction forces perpendicular to adherence pressures due to Coulomb friction between the material of pressing heads 49 and the material of pliable object 1. Thus the force is generated between pliable object 1 and pressing heads 49 carried by arms 6. In a case of need, only arms 6 themselves can be used instead of arms 6 with press heads 17.

Figure 23 shows a schematic depiction of strengthening fixture 5 in a form of a thimble. It consists of a cylinder with an end wall on one side (on the right in the Figure); walls 51 are pliable either due to their thin thickness or due to holes 52 situated in the wall. Pliability of the cylinder of strengthening fixture 5 allows either its putting on flexible pliable object 1, while both strengthening fixture 5 and flexible pliable object 1 are deformed and strutting occurs due to friction, thanks to which a force, for example the pulling force, can be used to act on flexible pliable object 1 through strengthening fixture 5; or pliability of the cylinder of strengthening fixture 5 allows its deformation when being clamped by handling tool 11, resulting in occurrence of friction forces between strengthening fixture 5 and flexible pliable object 1. In spite of the pliability of strengthening fixture 5 its rigidity is higher than the rigidity of flexible pliable object 1, so it helps to transfer forces between handling tool 11 and pliable object 1.

Figure 24 shows a schematic depiction of another strengthening fixture 5 in a form of a hollow needle. It consists of a cylinder the walls 51 of which can be pliable either due to their thin thickness or due to holes 52 situated in the wall; however, the walls can even be rigid. A function of a potential pliability of the cylinder of strengthening fixture 5 is similar as described for Fig. 23. The cylinder has holes on both sides through which flexible pliable object 1 passes; flexible pliable object 1 has a blocking barrier 53 on one of its ends. Blocking barrier 53 can be created as a knot or a tightened sleeve slid on flexible pliable object 1 or a smelted end of flexible pliable object 1. A function of blocking barrier 53 is to avoid pliable object 1 passing back through the hole in strengthening fixture 5, so that flexible pliable object 1 can be pulled by strengthening fixture 5 from the hole in barrier 4 or handled using a motion of strengthening fixture 5.

Figure 25 shows a schematic depiction of a different barrier 4 with an opening created by another loop-shaped flexible pliable object 1 that can be manipulated, too, as evident in the Figure. The pushing of flexible pliable object 1 through, as depicted in the Figure, demonstrates that such flexible pliable objects 1 can be interlaced and knots can be created of them automatically using robots.

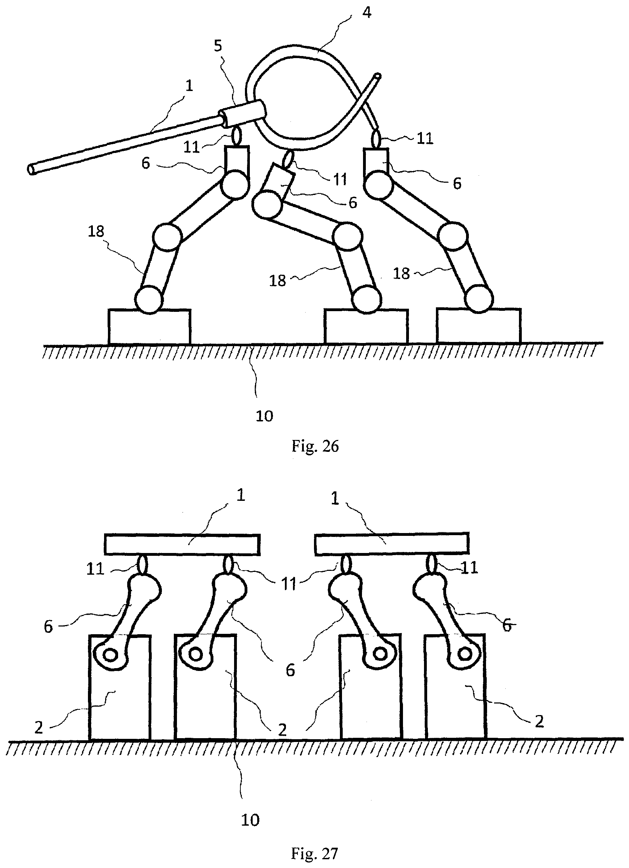

Figure 26 shows a schematic depiction of handling flexible pliable objects 1 and 4 by pushing (pulling) flexible pliable object 1 through the hole in loop-shaped barrier 4 made of a flexible pliable object as depicted in Fig. 25. Flexible pliable object 1 is equipped with strengthening fixture 5. Here, the pushing through is carried out using three stationary industrial robots 18.

Figure 27 shows a schematic depiction of handling two pliable, especially flexible, objects 1 (on the left and on the right in the Figure) using two groups of HRC robots 2 (on the left and on the right in the Figure). On the left in the Figure two stationary HRC robots 2 attached to frame 10 have grasped pliable object 1 and move it to a required target position using two handling tools 11 carried by arms 6. Similarly, on the right in the Figure two stationary HRC robots 2 attached to frame 10 have grasped pliable object 1 and move it to a required target position using two handling tools 11 carried by arms 6. Both groups of the HRC robots perform a coordinated motion in order to cooperate in moving manipulated pliable objects 1 over to a required position and, in case of need, finish the assembly or other manufacturing operation. An example of such an operation is interlinking of pliable objects 1, which are cables, using connectors. There can be more handled pliable objects 1, groups of HRC robots 2 and HRC robots 2 in each group.

Only processes of forces generating between handling tool 11 and pliable object 1 are described above, especially in Figs. 17-22. A reverse process leads to their release.

Considering that each individual HRC robot can only develop a low force, thus there is no risk of people injured within its working area and a failure of more HRC robots in a congruent direction at the same time is highly improbable, people can work within a working area of HRC robots without a risk of being injured by a HRC robot.

An advantage of the invention described above is also a possibility to use HRC robots for more complicated manipulations, e.g. for pushing (pulling) pliable object 1 through a hole in baffle 4 as described.

In all the cases conventional industrial robots 18 and 19 can be used instead of HRC robots 2 or 3. Even then this is a cost-saving solution because there is no need for using manipulation fixtures 21 with a high weight and the use of two smaller robots instead of a big one is more advantageous for handling. The procedure of pushing (pulling) flexible pliable object 1 through a hole in barrier 4 has not been possible even for industrial robots 20 so far.

All variants described above can be combined one with another. HRC robot 2 or 3, industrial robots 18 or 19 and other tools are computer controlled.

All the depictions are schematic in a projection into a plane, the devices are spatial.
and, in case of need, finish the assembly or other manufacturing operation. An example of such an operation is interlinking of pliable objects 1, which are cables, using connectors. There can be more handled pliable objects 1, groups of HRC robots 2 and HRC robots 2 in each group.

Only processes of forces generating between handling tool 11 and pliable object 1 are described above, especially in Figs. 17-22. A reverse process leads to their release.

Considering that each individual HRC robot can only develop a low force, thus there is no risk of people injured within its working area and a failure of more HRC robots in a congruent direction at the same time is highly improbable, people can work within a working area of HRC robots without a risk of being injured by a HRC robot.

An advantage of the invention described above is also a possibility to use HRC robots for more complicated manipulations, e.g. for pushing (pulling) pliable object 1 through a hole in baffle 4 as described.

In all the cases conventional industrial robots 18 and 19 can be used instead of HRC robots 2 or 3. Even then this is a cost-saving solution because there is no need for using manipulation fixtures 21 with a high weight and the use of two smaller robots instead of a big one is more advantageous for handling. The procedure of pushing (pulling) flexible pliable object 1 through a hole in barrier 4 has not been possible even for industrial robots 20 so far.

All variants described above can be combined one with another. HRC robot 2 or 3, industrial robots 18 or 19 and other tools are computer controlled.

All the depictions are schematic in a projection into a plane, the devices are spatial.

## Claims

1. A method for handling pliable objects (1) by means of at least one robot (2, 3) where a pliable object (1) is gripped by robot arms (6), wherein the pliable object (1) is moved over to a defined position or a static fixture, then a strengthening fixture (5) is put on the pliable object, subsequently before a barrier (4) with hole the pliable object is gripped by handling tools (11) directly connected to at least two arms (6) of one or more industrial robots or HRC (human-robot collaboration) robots and the pliable object is pushed into the hole in the barrier (4) and taken out from the hole by an industrial robot or HRC robot behind the barrier, whereas during handling the pliable object, the handling tools change the grasp on the pliable object, whereby the method is for subsequent handling within a manufacturing or assembling operation.

2. A method for handling pliable objects as described in Claim 1, **characterized in that** wherein during pushing the pliable object through the hole in the barrier the pliable object is rotated around its longitudinal axis in one direction using an industrial or HRC robot.

3. A method for handling pliable objects as described in previous Claims, **characterized in that** during pushing the pliable object through the hole in the barrier, the pliable object is rotated alternately in one or opposite directions of the rotation around its longitudinal axis using an industrial or HRC robot.

4. A method for handling pliable objects as described in previous Claims, **characterized in that** during pushing the pliable object through the hole, at least one of the robots or robot arms placed before a barrier moves behind the barrier.

5. A method for handling pliable objects as described in previous Claims, **characterized in that** for following handling within a manufacturing or assembling operation at least two separate pliable objects are gripped by at least two groups of industrial robots or HRC robots.

6. A method for handling pliable objects as described in previous Claims, **characterized in that** a manufacturing or assembling operation lies in a mutual interlacement of pliable objects.

7. A system for handling pliable objects using robot arms consisting of one or more industrial or HRC robots with at least two handling tools (11) and a strengthening fixture (5) configured to be put on the pliable object (1), whereby the handling tools (11) are carried by the arms (6) of the one or more industrial or HRC robots, whereby the one or more industrial or HRC robots are stationary industrial robots (18) or mobile industrial robots (19), or stationary HRC robots (2) or mobile HRC robots (3).

## Patentansprüche

1. Verfahren zum Handhaben biegsamer Objekte (1) mittels mindestens eines Roboters (2,3), wobei ein biegsames Objekt (1) von Roboterarmen (6) gegriffen wird, wobei das biegsame Objekt (1) zu einer definierten Position oder einer statischen Vorrichtung bewegt wird, dann eine Verstärkungsvorrichtung (5) auf dem biegsamen Objekt angebracht wird, anschließend wird das biegsame Objekt vor einer Barriere (4) mit Loch von Handhabungswerkzeugen (11) gegriffen, die direkt mit mindestens zwei Armen (6) eines oder mehrerer Industrieroboter oder HRC-Roboter (Mensch-Roboter-Kollaborationsroboter) verbunden sind, und das biegsame Objekt wird in das Loch in der Barriere (4) geschoben und von einem Industrieroboter oder HRC-Roboter hinter der Barriere aus dem Loch entnommen, wobei die Handhabungswerkzeuge während des Handhabens des biegsamen Objekts den Griff am biegsamen Objekt ändern, wobei das Verfahren für die nachfolgende Handhabung innerhalb eines Fertigungs- oder Montagevorgangs vorgesehen ist.

2. Verfahren zum Handhaben biegsamer Objekte gemäß Anspruch 1, **dadurch gekennzeichnet, dass** das biegsame Objekt beim Durchschieben durch die Öffnung in der Barriere mithilfe eines Industrieroboters oder HRC-Roboters um seine Längsachse in eine Richtung gedreht wird.

3. Verfahren zum Handhaben biegsamer Objekte gemäß den vorherigen Ansprüchen, **dadurch gekennzeichnet, dass** das biegsame Objekt beim Durchschieben durch die Öffnung in der Barriere mithilfe eines Industrieroboters oder HRC-Roboters abwechselnd in eine oder entgegengesetzte Richtungen um seine Längsachse gedreht wird.

4. Verfahren zum Handhaben biegsamer Objekte gemäß den vorherigen Ansprüchen, **dadurch gekennzeichnet, dass** sich beim Durchschieben des biegsamen Objekts durch die Öffnung mindestens einer der vor einer Barriere positionierten Roboter oder Roboterarme hinter die Barriere bewegt.

5. Verfahren zum Handhaben biegsamer Objekte gemäß den vorherigen Ansprüchen, **dadurch gekennzeichnet, dass** zur Weiterverarbeitung im Rahmen eines Fertigungs- oder Montagevorgangs mindestens zwei separate biegsame Objekte von mindestens zwei Gruppen von Industrierobotern oder HRC-Robotern gegriffen werden.

6. Verfahren zum Handhaben biegsamer Objekte gemäß den vorhergehenden Ansprüchen, **dadurch gekennzeichnet, dass** ein Fertigungs- oder Montagevorgang in der gegenseitigen Verzahnung biegsamer Objekte besteht.

7. System zum Handhaben biegsamer Objekte mittels Roboterarmen, bestehend aus einem oder mehreren Industrie- oder HRC-Robotern mit mindestens zwei Handhabungswerkzeugen (11) und einer Verstärkungsvorrichtung (5), die so konfiguriert ist, dass sie auf dem biegsamen Objekt (1) angebracht wird. Die Handhabungswerkzeuge (11) werden von den Armen (6) des oder der Industrie- oder HRC-Roboter getragen. Bei dem oder den Industrie- oder HRC-Robotern handelt es sich um stationäre Industrieroboter (18) oder mobile Industrieroboter (19) oder stationäre HRC-Roboter (2) oder mobile HRC-Roboter (3).

## Revendications

1. Procédé de manipulation d'objets souples (1) au moyen d'au moins un robot (2,3), dans lequel un objet souple (1) est saisi par des bras robotisés (6), l'objet souple (1) étant déplacé vers une position définie ou un dispositif de fixation statique, puis un dispositif de renforcement (5) est placé sur l'objet souple, puis, avant une barrière (4) percée d'un trou, l'objet souple est saisi par des outils de manipulation (11) directement connectés à au moins deux bras (6) d'un ou plusieurs robots industriels ou robots HRC (collaboration homme-robot). L'objet souple est ensuite poussé dans le trou de la barrière (4) et retiré du trou par un robot industriel ou HRC situé derrière la barrière. Pendant la manipulation de l'objet souple, les outils de manipulation modifient leur prise sur l'objet souple. Ce procédé est destiné à une manipulation ultérieure dans le cadre d'une opération de fabrication ou d'assemblage.

2. Procédé de manutention d'objets souples selon la revendication 1, **caractérisé en ce que**, lors du passage de l'objet souple à travers l'orifice de la barrière, celui-ci est mis en rotation autour de son axe longitudinal dans un sens à l'aide d'un robot industriel ou d'un robot HRC.

3. Procédé de manutention d'objets souples selon les revendications précédentes, **caractérisé en ce que**, lors du passage de l'objet souple à travers l'orifice de la barrière, celui-ci est mis en rotation alternativement dans un sens ou dans le sens opposé de sa rotation autour de son axe longitudinal à l'aide d'un robot industriel ou d'un robot HRC.

4. Procédé de manutention d'objets souples selon les revendications précédentes, **caractérisé en ce que**, lors du passage de l'objet souple à travers l'orifice, au moins un des robots ou bras robotisés placés avant la barrière se déplace derrière celle-ci.

5. Procédé de manutention d'objets souples selon les revendications précédentes, **caractérisé en ce que**, lors de la manutention ultérieure au cours d'une opération de fabrication ou d'assemblage, au moins deux objets souples distincts sont saisis par au moins deux groupes de robots industriels ou de robots HRC.

6. Procédé de manutention d'objets souples tel que décrit dans les revendications précédentes, **caractérisé en ce qu'**une opération de fabrication ou d'assemblage consiste en un entrelacement mutuel d'objets souples.

7. Système de manutention d'objets souples utilisant des bras robotisés, composé d'un ou plusieurs robots industriels ou robots HRC dotés d'au moins deux outils de manutention (11) et d'un dispositif de renforcement (5) conçu pour être placé sur l'objet souple (1). Les outils de manutention (11) sont portés par les bras (6) du ou des robots industriels ou robots HRC, lesquels peuvent être des robots industriels stationnaires (18) ou mobiles (19), ou des robots HRC stationnaires (2) ou mobiles (3).
